# FASCICULE DE BREVET EUROPEEN

(11) **EP 3 314 773 B1**
(45) Date de publication et mention de la délivrance du brevet: **13.11.2019**
(21) Numéro de dépôt: 16733383.0
(22) Date de dépôt: 22.06.2016
(51) Int. Cl.: H04L 27/156, H04L 27/233, H04L 27/20, H04L 27/26

(54) **PROCÉDÉ ET DISPOSITIF DE RÉCEPTION D'UN SIGNAL MODULÉ EN PHASE OU EN FRÉQUENCE PAR UNE SÉQUENCE DE SYMBOLES À DEUX ÉTATS**
VERFAHREN UND VORRICHTUNG FÜR DEN EMPFANG VON EINEM DURCH EINE SYMBOLSEQUENZ, DIE ZWEI ZUSTÄNDE HABEN KANN, PHASEN- ODER FREQUENZMODULIERTEN SIGNAL
METHOD AND APPARATUS FOR RECEIVING A SIGNAL MODULATED IN PHASE OR FREQUENCY BY A SEQUENCE OF TWO-STATES SYMBOLS

(30) Priorité: 26.06.2015 FR 1555943
(43) Date de publication de la demande: 02.05.2018
(73) Titulaire: SIGFOX, 31670 Labège (FR)
(72) Inventeur: CHALBOS, Nicolas, 31600 Eaunes (FR); HUBERT, Loïc, 31410 Saint-Sulpice-Sur-Lèze (FR); FOURTET, Christophe, 82170 Pompignan (FR)
(74) Mandataire: Ipside
(86) Numéro de dépôt international: PCT/EP2016/064444
(87) Numéro de publication internationale: WO 2016/207230

(56) Documents cités:
- YI-LIN TSAI ET AL: "A 400MHz 10Mbps D-BPSK receiver with a reference-less dynamic phase-to-amplitude demodulation technique", 2014 SYMPOSIUM ON VLSI CIRCUITS DIGEST OF TECHNICAL PAPERS, IEEE, 10 juin 2014 (2014-06-10), pages 1-2, XP032622409, DOI: 10.1109/VLSIC.2014.6858383 ISBN: 978-1-4799-3327-3 [extrait le 2014-07-17]

## Description

### DOMAINE TECHNIQUE

La présente invention appartient au domaine des systèmes de communication sans fil, et concerne plus particulièrement un procédé de réception d'un signal utile correspondant à un signal modulé en phase ou en fréquence par une séquence de symboles à deux états correspondant à une séquence de données binaires.

### ÉTAT DE LA TECHNIQUE

La présente invention trouve une application particulièrement avantageuse, bien que nullement limitative, pour la réception d'un signal BPSK (« Binary Phase Shift Keying ») ou DBPSK (« Differential » BPSK).

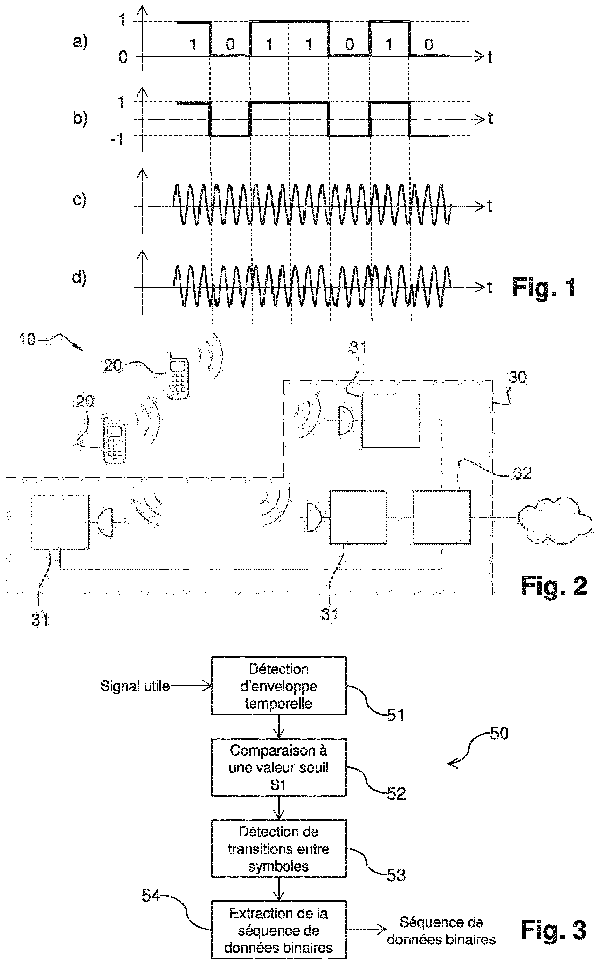

La figure 1 représente schématiquement le principe de génération d'un signal BPSK à partir d'une séquence de données binaires.

Tel qu'illustré par la partie a) de la figure 1, dans la séquence de données binaires, chaque donnée binaire ou « bit » peut prendre la valeur 0 ou 1. Dans l'exemple illustré par la partie a) de la figure 1, la séquence de données binaires correspond à « 1 0 1 1 0 1 0 ».

La partie c) de la figure 1 représente un signal sensiblement sinusoïdal, dit « porteuse », et la partie d) de la figure 1 représente le signal BPSK obtenu en modulant la phase de la porteuse au moyen de la séquence de données binaires illustrée par la partie a) de la figure 1.

Tel qu'illustré par la partie d) de la figure 1, lorsque le bit à émettre est égal à 1, le signal BPSK est identique à la porteuse. Par contre, lorsque le bit à émettre est égal à 0, le signal BPSK correspond à la porteuse déphasée de 180° (π), c'est-à-dire correspond à la porteuse multipliée par un facteur -1.

On peut donc voir le signal BPSK comme le produit de la porteuse par une séquence, illustrée par la partie b) de la figure 1, de symboles à deux états : un premier état égal à 1 lorsque le bit à émettre est égal à 1, et un second état égal -1 lorsque le bit à émettre est égal à 0.

Pour recevoir un signal BPSK, il faut multiplier le signal BPSK reçu par un signal sinusoïdal synchronisé en fréquence et en phase avec la porteuse dudit signal BPSK. Le résultat de cette multiplication est ensuite filtré passe-bas avant d'extraire la séquence de données binaires.

Dans le contexte de l'« Internet des objets » (« Internet of Things » ou loT dans la littérature anglo-saxonne), chaque objet de la vie de tous les jours a vocation à devenir un objet communiquant, et est à cet effet équipé d'un terminal adapté à émettre des données à destination d'un réseau d'accès, généralement par voie radio. Le réseau d'accès comporte des stations de base qui collectent les données émises par lesdits terminaux.

Dans un tel contexte, il est important de disposer de solutions qui soient à la fois faible coût (donc faible complexité) et en même temps faiblement consommatrices en énergie. Ceci permet par exemple de rendre communiquant beaucoup d'objets de la vie de tous les jours sans impacter leur coût de production de façon significative, et surtout sans trop impacter leur autonomie lorsqu'ils sont opérés sur batterie. Du côté des terminaux, l'utilisation, par exemple, de la modulation BPSK permet d'avoir une solution simple et peu coûteuse à implémenter pour la partie émission de données.

Comme pour tout système de communication sans fil, il est important de disposer d'une couverture géographique importante afin de pouvoir collecter des données émises par un maximum de terminaux. Bien que les systèmes de communication sans fil pour l'IoT permettent d'avoir une portée plus importante que les systèmes de communication sans fil cellulaires de téléphonie mobile, la couverture de certaines zones, en particulier des zones en sous-sol ou à l'intérieur de bâtiments, reste problématique.

Pour pallier ces manques de couverture, il convient de densifier le réseau d'accès par l'addition de stations de base dites « femtocellules » (« femtocell » dans la littérature anglo-saxonne) qui ont vocation à couvrir des zones de dimensions restreintes et mal desservies par les autres stations de base du réseau d'accès.

Il est clair qu'une telle approche de densification doit reposer sur des solutions particulièrement bas coût sans lesquelles la rentabilité des déploiements serait compromise. Dans un tel contexte, l'utilisation du démodulateur BPSK conventionnel, qui nécessite de générer un signal sinusoïdal synchronisé en fréquence et en phase avec la porteuse du signal BPSK, s'avère trop complexe et coûteuse à implémenter.

Dans un système de communication sans fil pour l'IoT, les échanges de données sont principalement monodirectionnels, en l'occurrence sur un lien montant entre les terminaux et le réseau d'accès. Un tel mode de fonctionnement est tout à fait satisfaisant pour de nombreuses applications, comme par exemple la télé-relève de compteurs de gaz, d'eau, d'électricité, la télésurveillance de bâtiments ou de maisons, etc.

Dans certaines applications, il peut être avantageux de pouvoir également effectuer des échanges de données dans l'autre direction, à savoir sur un lien descendant du réseau d'accès vers les terminaux, par exemple pour reconfigurer un terminal et/ou commander un actionneur relié audit terminal. Toutefois, il est nécessaire d'offrir une telle capacité en limitant l'impact sur la complexité, le coût et la consommation électrique des terminaux, de sorte qu'il est a priori exclu d'utiliser le démodulateur BPSK conventionnel.

On connaît de la publication scientifique « A 400 MHz D-BPSK receiver with a reference-less dynamic phase-to-amplitude demodulation technique », rédigée par Yi-Li Tsai et al., un démodulateur pour signal D-BPSK.

Dans cette publication scientifique, le démodulateur comporte en entrée un convertisseur PM/AM (« Phase Modulation/ Amplitude Modulation ») qui convertit un signal modulé en phase PM (le signal D-BPSK) en un signal modulé en amplitude AM, qui se présente sous la forme d'un oscillateur contrôlé par entrée numérique (« Digitally Controlled Oscillator » ou DCO dans la littérature anglo-saxonne). Après avoir effectué cette conversion PM/AM sur le signal D-BPSK, il est possible de mettre en œuvre des techniques conventionnelles de démodulation AM.

Toutefois, un tel démodulateur pour signal D-BPSK s'avère également trop complexe et trop coûteux à implémenter dans un système de communication sans fil pour l'IoT.

### EXPOSÉ DE L'INVENTION

La présente invention a pour objectif de remédier à tout ou partie des limitations des solutions de l'art antérieur, notamment celles exposées ci-avant, en proposant une solution qui permette de recevoir de manière simple et peu coûteuse un signal modulé en phase ou en fréquence par une séquence de symboles à deux états, par exemple un signal BPSK ou DBPSK.

A cet effet, et selon un premier aspect, l'invention concerne un procédé de réception, par un dispositif récepteur d'un système de communication sans fil, d'un signal utile émis par un dispositif émetteur, ledit signal utile correspondant à un signal modulé en phase ou en fréquence par une séquence de symboles à deux états correspondant à une séquence de données binaires, ledit procédé de réception comportant :
- la détection d'une enveloppe temporelle du signal utile,
- la comparaison de l'enveloppe temporelle détectée à une valeur seuil prédéterminée,
- la détection de transitions entre symboles consécutifs du signal utile : une transition entre deux symboles consécutifs dont les états respectifs sont différents étant détectée lorsque l'enveloppe temporelle détectée est inférieure à la valeur seuil, et une transition entre deux symboles consécutifs dont les états respectifs sont identiques étant détectée lorsque l'enveloppe temporelle détectée est supérieure à ladite valeur seuil,
- l'extraction de la séquence de données binaires du signal utile en fonction des transitions entre états différents détectées et en fonction des transitions entre états identiques détectées.

Ainsi, le procédé de réception repose sur la détection d'une enveloppe temporelle du signal utile. La détection d'enveloppe temporelle est connue dans le cadre de la réception de signaux modulés en amplitude, puisque dans un tel cas l'enveloppe temporelle détectée est sensiblement proportionnelle à la séquence de symboles émise.

Les signaux modulés en phase ou fréquence sont en principe d'amplitude constante. Toutefois, les inventeurs ont constaté que, du fait que la séquence de symboles est généralement filtrée à l'émission pour réduire l'occupation spectrale du signal utile, ledit signal utile émis présente une baisse d'amplitude lors des transitions entre des symboles consécutifs qui correspondent à des états différents.

L'enveloppe temporelle détectée est donc avantageusement utilisée, dans le cadre de la réception d'un signal modulé en phase ou en fréquence, pour détecter les transitions entre états différents (qui se traduisent par une baisse de l'amplitude de l'enveloppe temporelle détectée entre les deux symboles consécutifs correspondants) et les transitions entre états identiques (qui se traduisent par une absence de baisse de l'amplitude de l'enveloppe temporelle détectée entre les deux symboles consécutifs correspondants). Les transitions entre états différents détectées et les transitions entre états identiques détectées permettent, dans le cas d'une modulation différentielle telle que la modulation DBPSK, de retrouver directement la séquence de données binaires émise. Dans le cas où la modulation utilisée n'est pas différentielle, par exemple dans le cas d'une modulation BPSK, la séquence de données binaires peut être retrouvée indirectement dès lors que l'on connaît l'état d'au moins une donnée binaire. Une telle connaissance peut être obtenue, notamment, dès lors que la séquence de données binaires émise comporte un motif de données binaires connu a priori du dispositif récepteur.

Par rapport à la publication scientifique susmentionnée, on note que la détection d'enveloppe temporelle est effectuée directement sur le signal utile, c'est-à-dire sur le signal modulé en phase ou en fréquence, et non sur un signal obtenu en sortie d'un convertisseur PM/AM. Par conséquent, le procédé de réception objet de la présente invention présente l'avantage, par rapport à la publication scientifique susmentionnée, de ne pas nécessiter de convertisseur PM/AM, tel qu'un oscillateur contrôlé par entrée numérique.

Dans des modes particuliers de mise en œuvre, le procédé de réception peut comporter en outre l'une ou plusieurs des caractéristiques suivantes, prises isolément ou selon toutes les combinaisons techniquement possibles.

Dans des modes particuliers de mise en œuvre, lesdits symboles de la séquence étant émis à une période symboles, ledit procédé de réception comporte la détermination d'instants de décision séparés par la période symboles, et les transitions entre symboles consécutifs du signal utile sont détectées en fonction desdits instants de décision.

Dans des modes particuliers de mise en œuvre, les instants de décision sont déterminés en fonction d'au moins un instant de détection d'une transition entre états différents.

Dans des modes particuliers de mise en œuvre, les instants de décision correspondent à des instants pour lesquels l'enveloppe temporelle détectée est supérieure à ladite valeur seuil, et :
- une transition entre états différents est détectée lorsque l'enveloppe temporelle détectée devient inférieure à ladite valeur seuil entre deux instants de décision consécutifs,
- une transition entre états identiques est détectée lorsque l'enveloppe temporelle détectée reste supérieure à ladite valeur seuil entre deux instants de décision consécutifs.

Dans des modes particuliers de mise en œuvre, le signal utile est un signal à bande ultra étroite.

Dans des modes particuliers de mise en œuvre, le signal utile est un signal BPSKou DBPSK.

Dans des modes particuliers de mise en œuvre, le signal utile est un signal GFSK (« Gaussian Frequency Shift Keying ») ou DGFSK (« Differential » GFSK).

Dans des modes particuliers de mise en œuvre, les moyens mis en œuvre pour détecter l'enveloppe temporelle du signal utile et pour comparer l'enveloppe temporelle détectée à la valeur seuil sont également mis en œuvre, dans le dispositif récepteur, pour recevoir des signaux modulés en amplitude.

Selon un second aspect, la présente invention concerne un produit programme d'ordinateur comportant un ensemble d'instructions de code de programme qui, lorsqu'elles sont exécutées par un processeur, configurent ledit processeur pour mettre en œuvre un procédé de réception selon l'un quelconque des modes de mise en œuvre de l'invention.

Selon un troisième aspect, la présente invention concerne un dispositif récepteur d'un système de communication sans fil, comportant des moyens configurés pour mettre en œuvre un procédé de réception selon l'un quelconque des modes de mise en œuvre de l'invention.

### PRÉSENTATION DES FIGURES

L'invention sera mieux comprise à la lecture de la description suivante, donnée à titre d'exemple nullement limitatif, et faite en se référant aux figures qui représentent :
- Figure 1 : déjà décrite, des diagrammes temporels représentant le principe de la modulation BPSK,
- Figure 2 : une représentation schématique d'un système de communication sans fil,

- Figure 3 : un diagramme illustrant les principales étapes d'un procédé de réception de signal utile,
- Figure 4 : des diagrammes temporels représentant le principe de fonctionnement du procédé de réception de la figure 3, dans le cas où le signal utile est un signal BPSK.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

La figure 2 représente schématiquement un système 10 de communication sans fil, comportant plusieurs terminaux 20 et un réseau d'accès 30 comportant plusieurs stations de base 31.

Les terminaux 20 et les stations de base 31 du réseau d'accès 30 échangent des signaux utiles sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Le système 10 de communication sans fil est par exemple à bande ultra étroite. Par « bande ultra étroite » (« Ultra Narrow Band » ou UNB dans la littérature anglo-saxonne), on entend que le spectre fréquentiel instantané des signaux utiles émis par les terminaux 20, à destination du réseau d'accès 30, est de largeur fréquentielle inférieure à un kilohertz. En effet, de tels systèmes de communication sans fil UNB sont particulièrement adaptés pour des applications du type M2M (acronyme anglo-saxon pour « Machine-to-Machine ») ou du type loT. Rien n'exclut cependant, suivant d'autres exemples, de considérer des terminaux 20 dont les signaux utiles émis ne sont pas à bande ultra étroite.

Les terminaux 20 sont adaptés à émettre des signaux utiles sur un lien montant à destination du réseau d'accès 30. Chaque station de base 31 est adaptée à recevoir les signaux utiles des terminaux 20 qui se trouvent à sa portée. Chaque signal utile ainsi reçu est par exemple traité par la station de base 31 et/ou par un serveur 32 du réseau d'accès 30.

Le système 10 de communication sans fil peut en outre être bidirectionnel. Le cas échéant, le réseau d'accès 30 est adapté à émettre, via les stations de base 31, des signaux utiles sur un lien descendant à destination de terminaux 20, lesquels sont adaptés à les recevoir. Les signaux utiles émis par les stations de base 31 sont par exemple à bande ultra étroite. Rien n'exclut cependant, suivant d'autres exemples, de considérer des stations de base 31 dont les signaux utiles émis ne sont pas à bande ultra étroite, et ce indépendamment de la largeur spectrale des signaux utiles des terminaux 20.

La présente invention concerne notamment un procédé 50 de réception d'un signal utile correspondant à un signal modulé en phase ou en fréquence par une séquence de symboles à deux états correspondant à une séquence de données binaires.

Dans la suite de la description, on se place de manière non limitative dans le cas d'un signal utile émis sur le lien montant, de sorte que le dispositif émetteur du signal utile est un terminal 20. Le dispositif récepteur, qui met en œuvre le procédé 50 de réception, est un équipement ou une combinaison d'équipements du réseau d'accès 30. Dans la suite de la description, on se place de manière non limitative dans le cas où les différentes étapes du procédé 50 de réception sont toutes mises en œuvre par une station de base 31. Rien n'exclut cependant, suivant d'autres exemples, que les différentes étapes du procédé 50 de réception soient mises en œuvre par le serveur 32 (qui reçoit le cas échéant le signal utile d'une station de base 31), ou soient mises en œuvre conjointement par une station de base 31 et ledit serveur 32.

Chaque station de base 31 comporte par exemple un module de traitement (non représenté sur les figures) comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 50 de réception. Dans une variante, chaque module de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes du procédé 50 de réception.

Chaque station de base 31 comporte en outre des moyens de communication sans fil, considérés comme connus de l'homme de l'art, permettant à ladite station de base de recevoir un signal utile émis par un terminal 20 sous la forme d'un signal radioélectrique.

En d'autres termes, chaque station de base 31 du réseau d'accès 30 comporte des moyens configurés de façon logicielle (produit programme d'ordinateur spécifique) et/ou matérielle (FPGA, PLD, ASIC, composants électroniques discrets, etc.) pour mettre en œuvre les différentes étapes du procédé 50 de réception de signal utile.

La figure 3 représente schématiquement les principales étapes du procédé 50 de réception d'un signal utile correspondant à un signal modulé en phase ou en fréquence, lesquelles sont :
- 51 détection d'une enveloppe temporelle du signal utile,
- 52 comparaison de l'enveloppe temporelle détectée à une valeur seuil prédéterminée,
- 53 détection de transitions entre symboles consécutifs du signal utile, à partir du résultat de la comparaison,
- 54 extraction de la séquence de données binaires du signal utile en fonction des transitions entre symboles consécutifs détectées.

Ainsi, le procédé 50 de réception repose sur la détection de l'enveloppe temporelle du signal utile. Une telle détection d'enveloppe temporelle du signal utile peut être réalisée de façon peu complexe et peu coûteuse, par exemple au moyen d'une diode, ou encore au moyen d'un détecteur à super réaction, etc.

Il est à noter que la détection d'enveloppe temporelle est réalisée directement sur le signal utile, c'est-à-dire sans effectuer préalablement une conversion des transitions de phase ou de fréquence dudit signal utile en variations d'amplitude, comme c'est le cas dans l'art antérieur. Le procédé 50 de réception peut cependant comporter d'autres étapes, notamment antérieures à la détection d'enveloppe temporelle (filtrage, amplification, translation fréquentielle, etc.), qui visent principalement à améliorer le rapport signal sur bruit dudit signal utile et/ou à le ramener sur une fréquence intermédiaire, mais qui ne réalisent aucune conversion des transitions de phase ou de fréquence du signal utile en variations d'amplitude.

De préférence, la détection d'enveloppe temporelle du signal utile est par exemple réalisée directement en sortie d'un amplificateur faible bruit (« Low Noise Amplifier » ou LNA dans la littérature anglo-saxonne) de la station de base 31 (dispositif récepteur).

Une telle détection d'enveloppe temporelle, directement sur le signal utile, est tout à fait inhabituelle dans le contexte de la détection d'un signal modulé en phase ou en fréquence, dans la mesure où les signaux modulés en phase ou en fréquence sont en principe d'amplitude constante. Toutefois, du fait que la séquence de symboles est généralement filtrée à l'émission pour réduire l'occupation spectrale du signal utile, ledit signal utile présente généralement une baisse d'amplitude lors des transitions entre des symboles consécutifs qui correspondent à des états différents.

Par conséquent, il est possible de détecter les transitions entre symboles consécutifs correspondant à des états différents en comparant l'enveloppe temporelle détectée à une valeur seuil S1 prédéterminée. Là encore, une telle comparaison peut être réalisée de façon peu complexe et peu coûteuse, par exemple au moyen d'un circuit comparateur à base d'amplificateur opérationnel, etc.

En pratique, une transition entre deux symboles consécutifs dont les états respectifs sont différents est alors détectée lorsque l'enveloppe temporelle détectée est inférieure à la valeur seuil S1.

Par contre, lors d'une transition entre deux symboles consécutifs correspondant à des états identiques, l'enveloppe temporelle détectée ne baisse pas de sorte que, lors d'une telle transition, l'enveloppe temporelle détectée est en principe supérieure à ladite valeur seuil S1.

Afin d'améliorer, la détection il est également possible de considérer d'autres aspects, comme par exemple l'aspect temporel. En particulier, les symboles de la séquence incluse dans le signal utile sont émis de manière périodique avec une période symboles Te prédéterminée (connue a priori du terminal 20 et/ou estimée par celui-ci), de sorte que la durée de chaque symbole est égale à ladite période symboles Te. Par conséquent, lors d'une transition entre états différents, l'enveloppe temporelle détectée est en principe inférieure à la valeur seuil S1 pendant une durée inférieure à la période symboles Te. Par contre, lors d'une transition entre états identiques, l'enveloppe temporelle détectée sera en principe supérieure à ladite valeur seuil S1 pendant une durée supérieure à ladite période symboles Te. Par conséquent, dans des modes particuliers de mise en œuvre, une transition entre états différents peut n'être considérée comme détectée que si l'enveloppe temporelle détectée est inférieure à ladite valeur seuil S1 pendant une durée inférieure à ladite période symboles Te et/ou pendant une durée minimale prédéfinie, inférieure à la période symboles Te, choisie de sorte à limiter la probabilité de fausse détection. En outre, une transition entre états identiques peut n'être considérée comme détectée que si l'enveloppe temporelle détectée est supérieure à ladite valeur seuil S1 pendant une durée supérieure à ladite période symboles Te.

Ensuite, il est possible d'extraire la séquence de données binaires du signal utile en fonction des transitions entre états différents détectées et en fonction des transitions entre états identiques détectées, et éventuellement en fonction d'informations complémentaires.

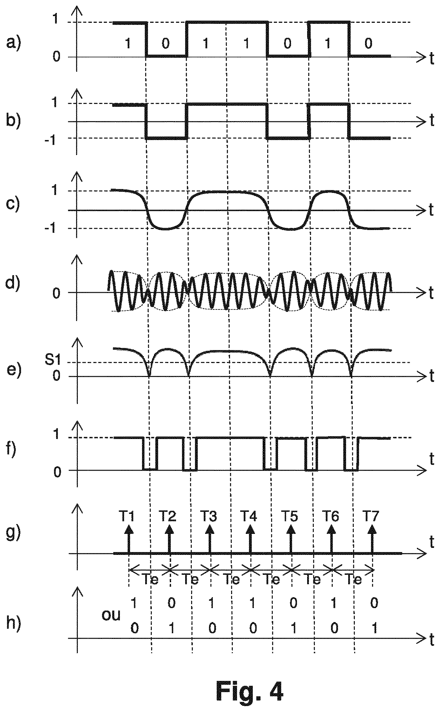

La figure 4 représente schématiquement le principe de fonctionnement du procédé 50 de réception, dans le cas où le signal utile est un signal BPSK.

La partie a) de la figure 4 représente la séquence de données binaires émise par le terminal 20, qui correspond à « 1 0 1 1 0 1 0 ».

La partie b) de la figure 4 représente la séquence de symboles à deux états associée à la séquence de données binaires représentée sur la partie a). Dans l'exemple illustré par la partie b), les deux états correspondent aux valeurs respectivement 1 et -1 sur la période symboles Te, de sorte que la séquence de symboles émis correspond à « 1 -1 1 1 -1 1 -1 ».

La partie c) de la figure 4 représente la séquence de symboles obtenue après filtrage de mise en forme, en l'occurrence un filtre passe-bas. Tel qu'illustré par la partie c) de la figure 4, les transitions entre états différents, de la valeur 1 à la valeur -1 ou de la valeur -1 à la valeur 1, sont lissées grâce au filtrage de mise en forme. Ainsi, la valeur de la séquence de symboles obtenue après filtrage diminue progressivement lors d'une transition de la valeur 1 à la valeur -1, et augmente progressivement lors d'une transition de la valeur -1 à la valeur 1, en passant dans les deux cas par zéro.

La partie d) de la figure 4 représente le signal BPSK obtenu en multipliant la porteuse par la séquence de symboles obtenue après filtrage. Du fait du filtrage de mise en forme, l'amplitude du signal BPSK tend vers zéro à chaque transition entre symboles correspondant à des états différents.

La partie e) de la figure 4 représente l'enveloppe temporelle détectée à l'issue de l'étape 51. Du fait du filtrage de mise en forme, l'enveloppe temporelle détectée tend vers zéro à chaque transition entre symboles correspondant à des états différents. Par contre, dans le cas d'une transition entre symboles correspondant à des états identiques (par exemple de la valeur 1 à la valeur 1 ou de la valeur -1 à la valeur -1), l'enveloppe temporelle détectée ne comporte pas de baisse, et reste sensiblement égale à l'amplitude du signal BPSK au milieu d'un symbole.

Par conséquent, on comprend qu'il est possible de détecter les transitions entre états différents et les transitions entre états identiques en choisissant une valeur seuil S1 adaptée, de préférence proche de zéro. La partie f) de la figure 4 représente le signal obtenu après seuillage de l'enveloppe temporelle détectée par rapport à la valeur seuil S1.

Dans l'exemple illustré par la partie f) de la figure 4, le signal obtenu après seuillage prend deux valeurs, par exemple respectivement 0 et 1, et ledit signal obtenu après seuillage est :
- égal à 0 lorsque l'enveloppe temporelle détectée est inférieure à la valeur seuil S1,
- égal à 1 lorsque l'enveloppe temporelle détectée est supérieure à la valeur seuil S1.

Afin de détecter les transitions entre états différents et les transitions entre états identiques, il est par exemple possible de considérer des instants de décision séparés par la période symboles Te. La partie g) de la figure 4 représente de tels instants de décision T1 à T7.

Dans l'exemple illustré par la partie g) de la figure 4, les instants de décision T1-T7 sont placés de sorte que, en chaque instant de décision, l'enveloppe temporelle détectée est supérieure à la valeur seuil S1, c'est-à-dire que le signal obtenu après seuillage est égal à 1. Par exemple, chaque instant de décision est placé de sorte à correspondre sensiblement au milieu d'un symbole. Pour de tels instants de décision :
- une transition entre états différents est détectée lorsque l'enveloppe temporelle détectée devient inférieure à ladite valeur seuil S1 entre deux instants de décision consécutifs,
- une transition entre états identiques est détectée lorsque l'enveloppe temporelle détectée reste supérieure à ladite valeur seuil S1 entre deux instants de décision consécutifs.

Dans l'exemple illustré par la figure 4 :
- une transition entre états différents est ainsi détectée entre les instants T1 et T2, T2 et T3, T4 et T5, T5 et T6, T6 et T7,
- une transition entre états identiques est ainsi détectée entre les instants T3 et T4.

Il est à noter que rien n'exclut, suivant d'autres exemples, de placer autrement les instants de décisions. Notamment, étant donné que l'on cherche à détecter les types de transitions entre symboles, les instants de décision peuvent être placés sensiblement au niveau des transitions entre symboles. Dans un tel cas, en un instant de décision donné, la valeur du signal obtenu après seuillage donne directement le type de transition :
- si le signal obtenu après seuillage est égal à 0, il s'agit d'une transition entre états différents,
- si le signal obtenu après seuillage est égal à 1, il s'agit d'une transition entre états identiques.

Tel qu'indiqué précédemment, les instants de décision T1-T7 sont séparés par la période symboles Te. Si la période symboles Te est connue a priori de la station de base 31, et si elle est en outre générée avec une précision suffisante par le terminal 20, alors ladite période symboles Te peut être générée par ladite station de base 31 indépendamment du signal utile. Si par contre ladite période symboles Te n'est pas connue a priori de la station de base 31 et/ou si la précision de génération de la période symboles par le terminal 20 et/ou par la station de base 31 est considérée comme insuffisante, alors la station de base 31 peut estimer ladite période symboles Te à partir du signal utile. Une telle estimation de la période symboles Te par la station de base 31 correspond à une synchronisation temporelle de l'horloge symboles de la station de base 31 sur l'horloge symboles du terminal 20.

Dans des modes préférés de mise en œuvre, les instants de décision T1-T7 sont déterminés en fonction de tout ou partie des instants de détection des transitions entre états différents. En effet, l'instant auquel une transition entre états différents est détectée correspond à la fin d'un symbole et au début du symbole suivant. Ainsi, dans le cas où la période symboles utilisée par la station de base 31, désignée par « Te' », est légèrement différente de la période symboles Te utilisée par le terminal 20, alors chaque instant de détection d'une transition entre états différents permet de recaler l'horloge symboles de ladite station de base 31 sur l'horloge symboles du terminal 20. Ainsi, il est possible d'éviter une dérive trop importante sur la durée de la séquence de symboles. En complément ou en alternative, deux instants de détection de transitions entre états différents étant espacés temporellement par une durée ΔT qui est égale à k·Te, k étant un nombre entier positif non connu a priori de la station de base 31, il est possible d'estimer la période symboles Te utilisée par le terminal 20 en fonction de la durée ΔT. Le nombre k peut être estimé par exemple en cherchant un nombre entier positif m qui minimise l'écart entre Te' et ΔT/m, l'estimation de la période symboles Te utilisée par le terminal 20 étant donnée par ΔT/k.

Tel qu'illustré par la partie h) de la figure 4, les transitions entre états différents détectées et les transitions entre états identiques détectées ne permettent pas, considérées seules et dans le cas d'un signal BPSK, d'extraire directement la séquence de données binaires « 1 0 1 1 0 1 0 ». En effet, en l'absence d'informations complémentaires, il est seulement possible de déterminer qu'il s'agit de la séquence de données binaires « 1 0 1 1 0 1 0 » ou de la séquence de données binaires « 0 1 0 0 1 0 1 ». En d'autres termes, en l'absence d'informations complémentaires, il existe deux séquences de données binaires possibles. Toutefois, il est possible de lever cette ambiguïté, notamment, dès lors que la séquence de données binaires comporte un motif de données binaires prédéfini, connu a priori de la station de base 31, dit « motif pilote ». Dans un tel cas, il suffit par exemple de rechercher la présence du motif pilote dans chacune des deux séquences de données binaires possibles, et celle desdites deux séquences de données binaires qui comporte ledit motif pilote correspond à la séquence de données binaires émise par le terminal 20. Il est à noter que d'autres méthodes peuvent être mises en œuvre pour lever cette ambiguïté, et que le choix d'une méthode particulière ne constitue qu'une variante d'implémentation de l'invention.

Par contre, dans le cas où le signal utile est un signal encodé de manière différentielle, tel qu'un signal DBSPK, les transitions entre états différents détectées et les transitions entre états identiques détectées permettent d'extraire directement la séquence de données binaires. En effet, dans le cas d'un signal DBPSK, les données binaires à émettre sont encodées, dans la séquence de symboles, sous la forme de transitions entre états différents et sous la forme de transitions entre états identiques. Par exemple :
- un bit égal à 0 est encodé sous la forme d'une transition entre états différents, c'est-à-dire sous la forme d'un saut de phase de 180° (π),
- un bit égal à 1 est encodé sous la forme d'une transition entre états identiques, c'est-à-dire que la phase de la porteuse n'est pas modifiée.

On comprend donc que les transitions entre états différents détectées et les transitions entre états identiques permettent, dans le cas d'un signal DBPSK, de retrouver directement la séquence de données binaires.

Il est à noter que les moyens mis en œuvre, au cours de l'étape 51 et de l'étape 52, pour détecter l'enveloppe temporelle du signal utile et pour comparer l'enveloppe temporelle détectée à la valeur seuil S1 peuvent également être mis en œuvre, dans la station de base 31, pour recevoir des signaux modulés en amplitude. En effet, de tels moyens sont utilisés de manière conventionnelle pour la réception de signaux modulés en amplitude, en particulier des signaux modulés en amplitude en tout ou rien (« On-Off Keying » ou OOK dans la littérature anglo-saxonne). Par conséquent, la station de base 31 peut avantageusement être configurée, sans en augmenter la complexité et le coût, pour recevoir à la fois des signaux modulés en amplitude et des signaux modulés en phase ou en fréquence.

Par contre, le procédé 50 de réception repose sur le fait qu'un signal modulé en phase ou en fréquence, du fait du filtrage de mise en forme, présente une baisse d'amplitude lors des transitions entre des symboles consécutifs qui correspondent à des états différents. Toutefois, cette baisse d'amplitude est brève, de durée inférieure à la période symboles Te voire très inférieure à ladite période symboles Te. L'étape 53 du procédé 50 de réception revient d'ailleurs, dans certains modes de mise en œuvre, à détecter :
- des intervalles temporels de durée inférieure à la période symboles Te, sur lesquels l'enveloppe temporelle détectée est inférieure à la valeur seuil S1, dits « intervalles bas »,
- des intervalles temporels de durée supérieure à ladite période symboles Te, sur lesquels l'enveloppe temporelle détectée est supérieure à ladite valeur seuil S1, dits « intervalles hauts ».

Les intervalles bas correspondent, dans le cas d'un signal modulé en phase ou en fréquence, à des transitions entre états différents, tandis que les intervalles hauts correspondent à des transitions entre états identiques.

Par conséquent, en vue de permettre ou de faciliter la réception, par la même station de base 31, de signaux modulés en amplitude, en particulier des signaux OOK, il peut s'avérer nécessaire de modifier l'encodage des symboles.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant le cas où le dispositif émetteur est un terminal 20 et où le dispositif récepteur est un équipement ou une combinaison d'équipements du réseau d'accès 30. Rien n'exclut cependant, suivant d'autres exemples, que le dispositif émetteur corresponde à un équipement ou une combinaison d'équipements du réseau d'accès 30, le dispositif récepteur correspondant alors à un terminal 20.

En outre, l'invention a été décrite en considérant principalement des modulations de phase, en l'occurrence BPSK et DBPSK. Rien n'exclut cependant, suivant d'autres exemples, de considérer d'autres modulations de phase et des modulations de fréquence, dès lors que les transitions entre symboles correspondant à des états différents se traduisent par une baisse de l'amplitude du signal utile. Un signal GFSK ou DGFSK, notamment, présente de telles baisses d'amplitude lors des transitions entre des symboles correspondant à des états différents, de sorte qu'il peut être détecté conformément à l'invention.

La description ci-avant illustre clairement que par ses différentes caractéristiques et leurs avantages, la présente invention atteint les objectifs qu'elle s'était fixés. En particulier, le procédé 50 de réception repose principalement sur une détection d'enveloppe temporelle, qui peut être réalisée de manière simple et peu coûteuse. En outre, le procédé 50 de réception ne nécessite pas, dans le cas notamment d'un signal BPSK ou DBPSK, de générer de signal sinusoïdal synchronisé en fréquence et en phase avec la porteuse dudit signal BPSK ou DBPSK.

## Revendications

1. Procédé (50) de réception, par un dispositif récepteur (31) d'un système (10) de communication sans fil, d'un signal utile émis par un dispositif émetteur (20), ledit signal utile correspondant à un signal modulé en phase ou en fréquence par une séquence de symboles à deux états correspondant à une séquence de données binaires, **caractérisé en ce qu'**il comporte :
- la détection (51) d'une enveloppe temporelle du signal utile, sans effectuer préalablement une conversion de transitions de phase ou de fréquence dudit signal utile en variations d'amplitude,
- la comparaison (52) de l'enveloppe temporelle détectée à une valeur seuil (S1) prédéterminée,
- la détection (53) de transitions entre symboles consécutifs du signal utile : une transition entre deux symboles consécutifs dont les états respectifs sont différents étant détectée lorsque l'enveloppe temporelle détectée est inférieure à la valeur seuil, et une transition entre deux symboles consécutifs dont les états respectifs sont identiques étant détectée lorsque l'enveloppe temporelle détectée est supérieure à ladite valeur seuil,
- l'extraction (54) de la séquence de données binaires du signal utile en fonction des transitions entre états différents détectées et en fonction des transitions entre états identiques détectées.

2. Procédé (50) selon la revendication 1, **caractérisé en ce que**, lesdits symboles de la séquence étant émis à une période symboles (Te), ledit procédé (50) de réception comporte la détermination d'instants de décision (T1-T7) séparés par la période symboles, et les transitions entre symboles consécutifs du signal utile sont détectées (53) en fonction desdits instants de décision (T1-T7).

3. Procédé (50) selon la revendication 2, dans lequel les instants de décision (T1-T7) sont déterminés en fonction d'au moins un instant de détection d'une transition entre états différents.

4. Procédé (50) selon l'une des revendications 2 à 3, dans lequel les instants de décision (T1-T7) correspondent à des instants pour lesquels l'enveloppe temporelle détectée est supérieure à ladite valeur seuil, et dans lequel :
- une transition entre états différents est détectée lorsque l'enveloppe temporelle détectée devient inférieure à ladite valeur seuil entre deux instants de décision consécutifs,
- une transition entre états identiques est détectée lorsque l'enveloppe temporelle détectée reste supérieure à ladite valeur seuil entre deux instants de décision consécutifs.

5. Procédé (50) selon l'une des revendications 1 à 4, dans lequel le signal utile est un signal à bande ultra étroite.

6. Procédé (50) selon l'une des revendications précédentes, dans lequel le signal utile est un signal BPSK ou DBPSK.

7. Procédé (50) selon l'une des revendications 1 à 5, dans lequel le signal utile est un signal GFSK ou DGFSK.

8. Procédé (50) selon l'une des revendications 1 à 7, dans lequel les moyens mis en œuvre pour détecter (51) l'enveloppe temporelle du signal utile et pour comparer (52) l'enveloppe temporelle détectée à la valeur seuil sont également mis en œuvre, dans le dispositif récepteur (31), pour recevoir des signaux modulés en amplitude.

9. Produit programme d'ordinateur **caractérisé en ce qu'**il comporte un ensemble d'instructions de code de programme qui, lorsqu'elles sont exécutées par un processeur, configurent ledit processeur pour mettre en œuvre un procédé (50) de réception selon l'une des revendications 1 à 8.

10. Dispositif récepteur (31) d'un système de communication sans fil, **caractérisé en ce qu'**il comporte des moyens configurés pour mettre en œuvre un procédé (50) de réception selon l'une des revendications 1 à 8.

## Patentansprüche

1. Verfahren (50) zum Empfang, durch eine Empfangsvorrichtung (31) eines drahtlosen Kommunikationssystems (10), eines Nutzsignals, das von einer Sendevorrichtung (20) gesendet wird, wobei das Nutzsignal einem Signal entspricht, das mit einer Symbolfolge mit zwei Zuständen, die einer binären Datenfolge entspricht, phasen- oder frequenzmoduliert ist, **dadurch gekennzeichnet, dass** es umfasst:
- Erkennen (51) einer zeitlichen Hüllkurve des Nutzsignals, ohne zuvor eine Umwandlung von Phasen- oder Frequenzübergängen des Nutzsignals in Amplitudenschwankungen vorzunehmen,
- Vergleichen (52) der erkannten zeitlichen Hüllkurve mit einem vorbestimmten Schwellenwert (S1),
- Erkennen (53) von Übergängen zwischen aufeinanderfolgenden Symbolen des Nutzsignals: wobei ein Übergang zwischen zwei aufeinanderfolgenden Symbolen, deren jeweilige Zustände unterschiedlich sind, erkannt wird, wenn die erkannte zeitliche Hüllkurve kleiner als der Schwellenwert ist, und wobei ein Übergang zwischen zwei aufeinanderfolgenden Symbolen, deren jeweilige Zustände gleich sind, erkannt wird, wenn die erkannte zeitliche Hüllkurve größer als der Schwellenwert ist,
- Extrahieren (54) der binären Datenfolge des Nutzsignals in Abhängigkeit von den erkannten Übergängen zwischen unterschiedlichen Zuständen und in Abhängigkeit von den erkannten Übergängen zwischen gleichen Zuständen.

2. Verfahren (50) nach Anspruch 1, **dadurch gekennzeichnet, dass**, wenn die Symbole der Folge mit einer Symbolperiode (Te) gesendet werden, das Empfangsverfahren (50) das Bestimmen von Entscheidungszeitpunkten (T1-T7) umfasst, die durch die Symbolperiode getrennt sind, und die Übergänge zwischen aufeinanderfolgenden Symbolen des Nutzsignals in Abhängigkeit von den Entscheidungszeitpunkten (T1-T7) erkannt (53) werden.

3. Verfahren (50) nach Anspruch 2, wobei die Entscheidungszeitpunkte (T1-T7) in Abhängigkeit von mindestens einem Erkennungszeitpunkt eines Übergangs zwischen unterschiedlichen Zuständen bestimmt wird.

4. Verfahren (50) nach einem der Ansprüche 2 bis 3, wobei die Entscheidungszeitpunkte (T1-T7) Zeitpunkten entsprechen, bei denen die erkannte zeitliche Hüllkurve größer als der Schwellenwert ist, und wobei:
- ein Übergang zwischen unterschiedlichen Zuständen erkannt wird, wenn die erkannte zeitliche Hüllkurve zwischen zwei aufeinanderfolgenden Entscheidungszeitpunkten kleiner als der Schwellenwert wird,
- ein Übergang zwischen gleichen Zuständen erkannt wird, wenn die erkannte zeitliche Hüllkurve zwischen zwei aufeinanderfolgenden Entscheidungszeitpunkten größer als der Schwellenwert bleibt.

5. Verfahren (50) nach einem der Ansprüche 1 bis 4, wobei das Nutzsignal ein Ultra-Schmalband-Signal ist.

6. Verfahren (50) nach einem der vorstehenden Ansprüche, wobei das Nutzsignal ein BPSK- oder DBPSK-Signal ist.

7. Verfahren (50) nach einem der Ansprüche 1 bis 5, wobei das Nutzsignal ein GFSK- oder DGFSK-Signal ist.

8. Verfahren (50) nach einem der Ansprüche 1 bis 7, wobei die Mittel, die eingesetzt werden, um die zeitliche Hüllkurve des Nutzsignals zu erkennen (51) und um die erkannte zeitliche Hüllkurve mit dem Schwellenwert zu vergleichen (52), in der Empfangsvorrichtung (31) ebenfalls eingesetzt werden, um amplitudenmodulierte Signale zu empfangen.

9. Computerprogrammprodukt, **dadurch gekennzeichnet, dass** es einen Satz Programmcodeanweisungen umfasst, die, wenn sie von einem Prozessor ausgeführt werden, den Prozessor dafür konfigurieren, ein Empfangsverfahren (50) nach einem der Ansprüche 1 bis 8 umzusetzen.

10. Empfangsvorrichtung (31) eines drahtlosen Kommunikationssystems, **dadurch gekennzeichnet, dass** sie Mittel umfasst, die dafür konfiguriert sind, ein Empfangsverfahren (50) nach einem der Ansprüche 1 bis 8 umzusetzen.

## Claims

1. A method (50) for the reception, by a receiver device (31) of a wireless communication system (10), of a useful signal transmitted by a transmitter device (20), said useful signal corresponding to a signal that is phase-modulated or frequency-modulated by a sequence of two-state symbols corresponding to a binary data sequence, **characterized in that** it includes:
- the detection (51) of a time-domain envelope of the useful signal without performing beforehand a conversion of the phase or frequency transitions of said useful signal into amplitude variations,
- the comparison (52) of the detected time-domain envelope with a predetermined threshold value (S1),
- the detection (53) of transitions between consecutive symbols of the useful signal: a transition between two consecutive symbols, the respective states of which are different, being detected when the detected time-domain envelope is less than the threshold value, and a transition between two consecutive symbols, the respective states of which are identical, being detected when the detected time-domain envelope is greater than said threshold value,
- the extraction (54) of the binary data sequence from the useful signal as a function of detected transitions between different states and as a function of detected transitions between identical states.

2. The method (50) as claimed in claim 1, **characterized in that**, said symbols of the sequence being transmitted at a symbol period (Te), said reception method (50) includes the determination of decision instants (T1-T7) separated by the symbol period, and the transitions between consecutive symbols of the useful signal are detected (53) as a function of said decision instants (T1-T7).

3. The method (50) as claimed in claim 2, in which the decision instants (T1-T7) are determined as a function of at least one instant of detection of a transition between different states.

4. The method (50) as claimed in one of claims 2 to 3, in which the decision instants (T1-T7) correspond to instants for which the detected time-domain envelope is greater than said threshold value, and in which :
- a transition between different states is detected when the detected time-domain envelope becomes less than said threshold value between two consecutive decision instants,
- a transition between identical states is detected when the detected time-domain envelope remains greater than said threshold value between two consecutive decision instants.

5. The method (50) as claimed in one of claims 1 to 4, in which the useful signal is an ultra-narrowband signal.

6. The method (50) as claimed in one of the preceding claims, in which the useful signal is a BPSK or DBPSK signal.

7. The method (50) as claimed in one of claims 1 to 5, in which the useful signal is a GFSK or DGFSK signal.

8. The method (50) as claimed in one of claims 1 to 7, in which the means implemented to detect (51) the time-domain envelope of the useful signal and to compare (52) the detected time-domain envelope with the threshold value are also implemented, in the receiver device (31), to receive amplitude-modulated signals.

9. A computer program product **characterized in that** it includes a set of program code instructions which, when they are executed by a processor, configure said processor to implement a reception method (50) as claimed in one of claims 1 to 8.

10. A receiver device (31) of a wireless communication system, **characterized in that** it includes means configured to implement a reception method (50) as claimed in one of claims 1 to 8.
